**Europäisches Patentamt**

**European Patent Office**

**Office européen des brevets**

(11) Veröffentlichungsnummer: **0 036 497**
A1

# (12) EUROPÄISCHE PATENTANMELDUNG

(21) Anmeldenummer: **81101343.2**

(22) Anmeldetag: **25.02.81**

(51) Int. Cl.³: **G 11 B  27/22,** G 11 B  15/10

(30) Priorität: **15.03.80  DE 3009999**

(43) Veröffentlichungstag der Anmeldung: **30.09.81**
**Patentblatt 81/39**

(84) Benannte Vertragsstaaten: **AT BE CH DE FR GB IT LI LU NL SE**

(71) Anmelder: **GRUNDIG E.M.V. Elektro-Mechanische Versuchsanstalt Max Grundig & Co. Kg., Kurgartenstrasse 37, D-8510 Fürth/Bayern (DE)**

(72) Erfinder: **Würl, Werner, Ing. grad., Voltastrasse 20, D-8510 Fuerth/Bayern (DE)**

(74) Vertreter: **Voigt, Günter, Kurgartenstrasse 37, D-8510 Fürth (DE)**

(54) Schaltungsanordnung zum automatischen Rückspulen eines magnetischen Aufzeichnungsträgers, insbesondere eines Videobandes, am Programmende.

㋗ Die auf einem magnetischen Aufzeichnungsträger vorhandenen Aufzeichnungen erstrecken sich häufig nicht über die gesamte Länge des Aufzeichnungsträgers. Dies gilt insbesondere, wenn nur Kurzprogramme aufgezeichnet werden. Um das Wiedergabegerät am Ende des Programms sofort an den Programmanfang zurückspulen zu können, wird ein Zusatzsignal auf das Band aufgezeichnet. Die Auswertung dieses Zusatzsignals erfolgt mit Hilfe einer Ausschaltung (14), die aus einem Gleichrichter (15) mit großer Entladezeitkonstante und einem nachgeschalteten, Steuerimpulse erzeugenden Schmitt-Trigger (16) besteht. Es hat sich als vorteilhaft erwiesen, eine auf eine aufgezeichnete Trägerschwingung ansprechende Ausschaltung (14) vorzusehen.

SCHALTUNGSANORDNUNG ZUM AUTOMATISCHEN RÜCKSPULEN EINES
MAGNETISCHEN AUFZEICHNUNGSTRÄGERS, INSBESONDERE EINES
VIDEOBANDES, AM PROGRAMMENDE

## Beschreibung

Die Erfindung bezieht sich auf eine Schaltungsanordnung
zum automatischen Rückspulen eines magnetischen Aufzeichnungsträgers, insbesondere eines Videobandes, am Programmende.

Wegen der genormten Längen der magnetischen Aufzeichnungsträger und der unterschiedlichen Längen der jeweiligen Aufzeichnungen kommt es häufig vor, daß die magnetischen Aufzeichnungsträger bei der Aufzeichnung nicht
über ihre volle Länge ausgenutzt werden. Dies gilt insbesondere, wenn nur Kurzprogramme aufgezeichnet werden.
Hier ist dann häufig die Speicherkapazität selbst der
kleinsten serienmäßig lieferbaren Einheit (Magnetbandspule, Magnetbandkassette) wesentlich größer als die zum Aufzeichnen des Kurzprogramms notwendige Kapazität. Am Anfang und am Ende des Aufzeichnungsträgers sind zwar im allgemeinen Markierungen zum Erzeugen eines selbsttätigen Stop- oder Rücklaufbefehls für das Wiedergabegerät vorhanden. Die Markierung am Ende des Aufzeichnungsträgers kann in den oben geschilderten Fällen - kurze Aufzeichnung auf einem relativ langen Aufzeichnungsträger - jedoch nicht zur Auswertung herangezogen werden.

Um das Wiedergabegerät am Ende des Programms sofort an den Programmanfang zurückspulen zu können, ist es bekannt, eine zusätzliche Markierung in Form einer Schaltfolie am Programmende auf den Aufzeichnungsträger aufzukleben. Nachteilig ist dabei jedoch, daß ein Entfernen der Schaltfolie praktisch nicht ohne Beschädigung des Aufzeichnungsträgers möglich ist. Eine ständige Anpassung an die wechselnden Programmlängen ist damit nicht möglich. Hinzu kommt, daß bei Geräten, in denen die Laufrichtung durch das Drehzahlverhältnis der beiden Wickelteller ermittelt wird, nur dann eine einwandfreie Funktion gegeben ist, wenn die Markierung nach mindestens der ersten Bandhälfte und einem von dem Drehzahlverhältnis abhängigen zusätzlichen Abstand gesetzt wird.

Der Erfindung liegt die Aufgabe zugrunde, eine einfache Schaltungsanordnung zu schaffen, die es auch bei beliebig wechselnden Programmlängen gestattet, den Aufzeichnungsträger bei Programmende automatisch zurückzuspulen.

Die Lösung der Aufgabe erfolgt erfindungsgemäß durch
die im kennzeichnenden Teil des Anspruchs 1 angegebenen
Maßnahmen.

Vorteilhafte Weiterbildungen ergeben sich aus den Unteransprüchen.

Die Erfindung wird nachfolgend unter Bezugnahme auf
die Zeichnungsfiguren beispielsweise beschrieben. Es
zeigen:

Fig. 1    ein die wesentlichen Teile der
          Schaltungsanordnung enthaltendes
          Blockschaltbild,

Fig. 2    ein Blockschaltbild einer bei
          der Aufnahme Verwendung findenden Schaltungsanordnung und

Fig. 3    ein Blockschaltbild einer bei
          der Wiedergabe Verwendung findenden Schaltungsanordnung.

Die Nutz- und Zusatzsignale vom magnetischen Aufzeichnungsträger 10 gelangen in an sich bekannter Weise über
einen Magnetkopf 11 und ggf. eine Verstärkerstufe 12
an einen ersten Eingang 13 einer Auswerteschaltung 14,
die aus einem Gleichrichter 15 und einem Schmitt-Trigger 16 besteht. Am Ausgang 17 der Auswerteschaltung 14 wird bei Vorliegen ganz bestimmter Voraussetzungen ein Impuls abgegeben, der entweder direkt als Rücklaufimpuls verwendet wird oder aber an den Eingang einer nachtriggerbaren monostabilen Kippstufe 18 weitergeleitet wird, an deren Ausgang dann der das Bandgerät steuernde Rücklaufimpuls abgreifbar ist. Als Ausgangssignal für den erwähnten Impuls zur Steuerung des Rücklaufes des Bandgerätes können entweder auf dem Band mit aufgezeichnete spezielle Steuersignale, Synchronimpulse, die Trägerfrequenz der aufgezeichneten Signale oder aber außerhalb der genutzten Bandbreite liegende Zusatzsignale verwendet werden.

Bei Videorecordern bieten sich unter anderem die Bildsynchronsignale an, die als kurze Impulse im Abstand von 40 ms auf einer zusätzlichen getrennten Steuerspur aufgezeichnet werden. Diese Synchronimpulse werden mittels eines Magnetkopfes 11, der genau auf die Steuerspur ausgerichtet ist, vom magnetischen Aufzeichnungsträger 10 abgegriffen und über eine Verstärkerschaltung 12 dem Eingang 13 der Auswerteschaltung 14 zugeführt. Die Auswerteschaltung 14 besteht im wesentlichen aus einem der Demodulation der Steuersignale dienenden Gleichrichter 15, der auch als Spitzenwertgleichrichter ausgebildet sein kann, und einem nachgeschalteten Schmitt-Trigger 16. Die Auswerteschaltung ist so gestaltet, daß beim Vorhandensein der Synchronimpulse auf dem Aufzeichnungsträger am Ausgang 17 der Auswerteschaltung 14 kein Signal verfügbar ist. Um auch eine sichere Funktion bei längeren Dropouts zu gewährleisten, ist die Auswerteschaltung so ausgelegt, daß erst beim Fehlen einer bestimmten Anzahl von Impulsen der Rücklauf ausgelöst wird. Die Auswerteschaltung 14 kann beispielsweise aus einem Spitzenwertgleichrichter 15 mit großer Entladezeitkonstante und einem nachfolgenden Schmitt-Trigger 16 bestehen. Der am Ausgang 17 der Auswerteschaltung 14 anstehende Impuls kann einer nachtriggerbaren monostabilen Kippstufe 18 mit langer Eigenzeit zugeführt werden. Ggf. kann die Kippstufe 18 auch dem Verstärker 13 direkt nachgeschaltet werden. Durch die beschriebenen Maßnahmen ist sichergestellt, daß immer dann, wenn die als Kriterium gewählten Signale für längere Zeit ausfallen, d. h. am Ende des auf dem Aufzeichnungsträger 10 enthaltenen Programms, der Aufzeichnungsträger 10 automatisch in seine Ausgangsposition zurückläuft.

Um Störungen beim Anlauf des Magnetbandgerätes zu vermeiden, erfolgt die Freigabe der Auswerteschaltung 14 erst nach Ablauf der Anlaufphase. Dies geschieht dadurch, daß am Ende der Anlaufphase ein Freigabeimpuls auf den weiteren Eingang 19 der Auswerteschaltung 14 gegeben wird. Ohne diesen Freigabeimpuls bleibt die Auswerteschaltung 14 außer Funktion.

Bei Magnetbandgeräten ohne Steuerspur, aber mit trägerfrequenter Aufzeichnung - wie beispielsweise bei einem Bildaufzeichnungsgerät - kann die Information für den automatischen Rücklauf des Aufzeichnungsträgers 10 auch vom Vorhandensein eines aufgezeichneten Trägersignals abhängig gemacht werden. Dazu wird der Träger in ganz ähnlicher Weise wie bereits oben beschrieben, mittels eines Gleichrichters 15 in der Auswerteschaltung 14 gleichgerichtet und mit Hilfe eines Schmitt-Triggers 16 der Rücklaufimpuls erzeugt. Auch hier ist selbstverständlich durch eine entsprechend lange Entladezeitkonstante für eine sichere Funktion der Auswerteschaltung auch während längerer Drop-outs zu sorgen.

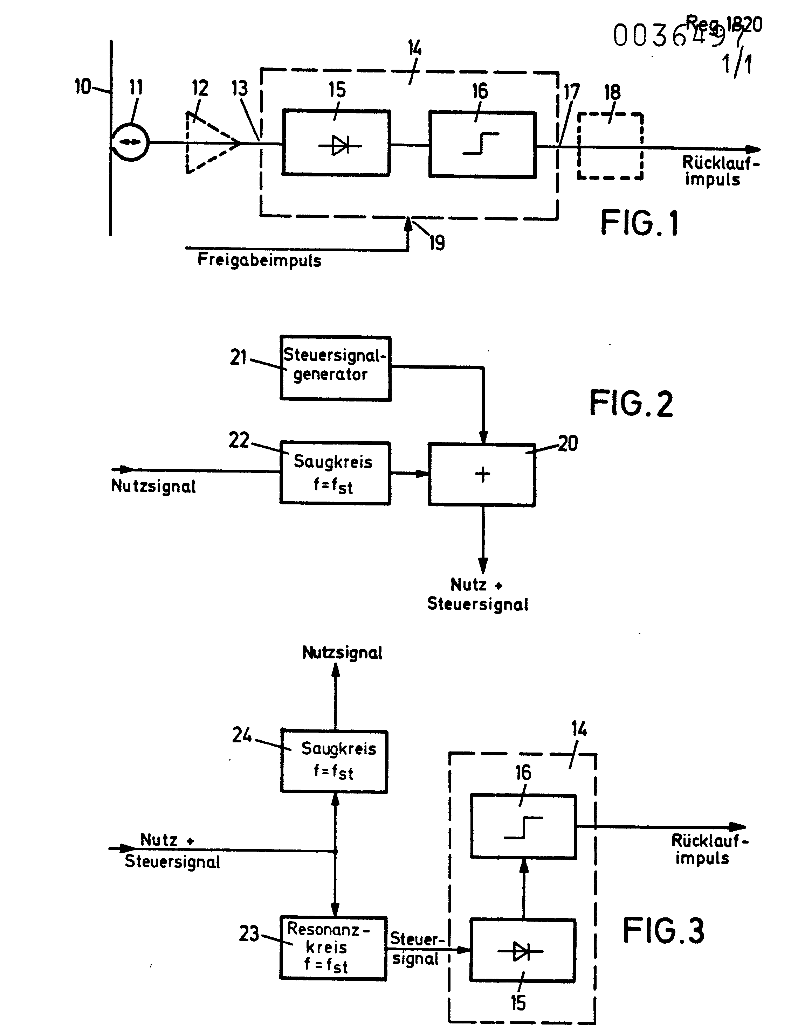

Bei Magnetbandgeräten ohne Steuerspur und ohne trägerfrequente Aufzeichnung wird der automatische Rücklauf vom Ende eines zusätzlich zur Nutzinformation aufgezeichneten Signals außerhalb der Nutzsignalbandbreite abgeleitet. Zu diesem Zweck wird bei der Aufnahme gemäß Fig. 2 in einer Addierstufe 20 dem eigentlichen Nutzsignal ein von einem Steuersignalgenerator 21 kommendes Steuersignal überlagert. Über einen auf die Steuerfrequenz abgestimmten Saugkreis 22 wird eine Rückwirkung des Steuersignals auf das Nutzsignal vermieden. Bei der Wiedergabe werden gemäß Fig. 3 vom Aufzeichnungsträger 10 sowohl das Nutz- als auch das Steuersignal abgegriffen. Über einen auf die Steuersignalfrequenz abgestimmten Resonanzkreis 23 wird aus dem Signalgemisch das Steuersignal herausgefiltert, das dann in der bereits. oben beschriebenen Art und Weise einer aus Gleichrichter 15 und Schmitt-Trigger 16 bestehende Auswerteschaltung 14 zugeführt wird. Im Weg des Nutzsignals ist ein auf die Steuersignalfrequenz abgestimmter Saugkreis 24 vorhanden, mit dessen Hilfe die Steuersignalkomponente aus dem Signalgemisch eliminiert wird, so daß am Ausgang dieses Saugkreises 24 nur noch das Nutzsignal zur Verfügung steht. Auch bei dieser Schaltung wird vorzugsweise ein Gleichrichter 15 mit großer Entladezeitkonstante verwendet.

Liegt die Frequenz des Steuersignals außerhalb der Nutzsignalbandbreite - z. B. Stereopilotton bei der Tonbandaufzeichnung - und sind Störungen des Nutzsignals durch das Steuersignal nicht zu befürchten, so kann auf den Saugkreis 24 selbstverständlich verzichtet werden.

0036497

SCHALTUNGSANORDNUNG ZUM AUTOMATISCHEN RÜCKSPULEN EINES
MAGNETISCHEN AUFZEICHNUNGSTRÄGERS, INSBESONDERE EINES
VIDEOBANDES, AM PROGRAMMENDE


Patentansprüche


1. Schaltungsanordnung zum automatischen Rückspulen
eines magnetischen Aufzeichnungsträgers, insbesondere
eines Videobandes, am Programmende, d a d u r c h
g e k e n n z e i c h n e t , daß eine ein Zusatzsignal
auswertende, aus einem Gleichrichter (15) mit großer
Entladezeitkonstante und einem nachgeschalteten, Steuerimpulse erzeugenden Schmitt-Trigger (16) bestehende Auswerteschaltung (14) vorhanden ist.


2. Schaltungsanordnung nach Anspruch 1, d a -
d u r c h g e k e n n z e i c h n e t , daß es sich
um eine auf besondere Steuerimpulse ansprechende Auswerteschaltung (14) handelt.


3. Schaltungsanordnung nach Anspruch 1, d a -
d u r c h g e k e n n z e i c h n e t , daß es sich

um eine auf eine aufgezeichnete Trägerschwingung ansprechende Auswerteschaltung (14) handelt.

4. Schaltungsanordnung nach Anspruch 1, d a - d u r c h   g e k e n n z e i c h n e t ,   daß es sich um eine auf ein neben dem eigentlichen Nutzsignal aufgezeichnetes Zusatzsignal ansprechende Auswerteschaltung (14) handelt.

5. Schaltungsanordnung nach einem der Ansprüche 1 bis 4,   d a d u r c h   g e k e n n z e i c h n e t , daß ein durch Steuerimpulse nachgriggerbarer monostabiler Multivibrator (18) vorhanden ist.

6. Schaltungsanordnung nach einem der Ansprüche 1 bis 5,   d a d u r c h   g e k e n n z e i c h n e t , daß der Gleichrichter(15) ein Spitzenwertgleichrichter ist.

Beschreibung:

FIG.1

Rücklaufimpuls

Freigabeimpuls

FIG.2

Steuersignalgenerator

Saugkreis
f=f$_{st}$

Nutzsignal

Nutz +
Steuersignal

Nutzsignal

Saugkreis
f=f$_{st}$

Nutz +
Steuersignal

Resonanzkreis
f = f$_{st}$

Steuersignal

Rücklaufimpuls

FIG.3

Europäisches Patentamt

**EUROPÄISCHER RECHERCHENBERICHT**

00 36497

Nummer der Anmeldung

EP 81 10 1343.2

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| | US – A – 3 846 831 (MICRO COMMUNICATIONS CORP.)<br>* Spalte 2, Zeilen 16 bis 37; Fig. 2 *<br>—— | 1-6 | G 11 B 27/22<br>G 11 B 15/10 |
| | DE – B2 – 2 638 813 (SHARP K.K.)<br>* Spalte 2, Zeilen 43 bis 59; Fig. 1 *<br>—— | 1,3,<br>5,6 | |
| | DE – A1 – 2 657 976 (W. GUMBMANN)<br>* Patentanspruch *<br>—— | 1-5 | RECHERCHIERTE SACHGEBIETE (Int. Cl.³) |
| | US – A – 3 893 177 (SHARP K.K.)<br>* Anspruch 1; Fig. 1 *<br>—— | 1-5 | G 11 B 15/00<br>G 11 B 27/00 |
| | FUNKSCHAU, Band 49, Nr. 24,<br>November 1977<br>München<br>M. RIEDEL "Suchen und Finden"<br>Seiten 1121 bis 1123<br>* Seite 1122, Spalte 2 bis Seite 1123, Spalte 1 *<br>—— | 1,5,6 | |
| A | DE – A1 – 2 837 598 (P. COPELAND et al.)<br>* Ansprüche 1, 2, 5, 7, 13 *<br>———— | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 05-06-1981 | ROGNONI |

EPA form 1503.1  06.78